# EUROPEAN PATENT APPLICATION

(11) **EP 2 955 425 A1**
(43) Date of publication of application: **16.12.2015**
(21) Application number: 15170823.7
(22) Date of filing: 05.06.2015
(51) Int. Cl.: F16L 37/107, F16L 37/18, F16L 37/248

(54) **HOSE COUPLERS**

(30) Priority: 09.06.2014 US 201462009728 P
(71) Applicant: Katch Kan Holdings Ltd., Edmonton, Alberta T6E 5C4 (CA)
(72) Inventor: Holtby, Quinn A. J., Edmonton, Alberta T6E 5C4 (CA); Greenwood, Dallas, Edmonton, Alberta T6E 5CA (CA)
(74) Representative: Rankin, Douglas

(57) **Abstract**

A hose coupler (10) having: a first sleeve (12) with a first mating end (16) and a first connector end (18) for a tank or hose; a second sleeve (14) with a second mating end (20) and a second connector end (22) for a tank or hose; a cam lock arm (28) on one of the first and second mating ends (16, 20) and a cam receiver (30) on the other of the first and second mating ends (16, 20); a first part (50) associated with the first sleeve (12) and a second part (51) associated with the second sleeve (14); in which the first and second parts (50, 51) are rotatable relative to one another between a first position in which the first and second sleeve (12, 14) are separable in an axial direction and a second position in which the first and second parts (50, 51) interlock to prevent axial separation of the first and second sleeves (12, 14).

## Description

### TECHNICAL FIELD

This document relates to hose couplers.

### BACKGROUND

Hose couplers are used to connect hoses and tanks together. Quick connectors are often used with hose couplers to provide an efficient mechanism of connecting and disconnecting a hose. One popular example of a quick connector is the cam and groove style. Cam arms rotate into contact with a groove on a male end of the coupler, in order to pull the ends of the coupler together to seal the hose. In some situations a cam arm may get accidentally bumped and opened, potentially leading to a fluid spill or other dangerous situation. Safety devices exist to prevent accidental hose coupler opening. Examples include pad locks, chains, and mechanisms designed to lock the cam arms in place once closed.

### SUMMARY

A hose coupler is disclosed comprising: a first sleeve with a first mating end and a first connector end for a tank or hose; a second sleeve with a second mating end and a second connector end for a tank or hose; a cam lock arm on one of the first and second mating ends and a cam receiver on the other of the first and second mating ends; a first part associated with the first sleeve and a second part associated with the second sleeve; in which the first and second parts are rotatable relative to one another between a first position in which the first and second sleeve are separable in an axial direction and a second position in which the first and second parts interlock to prevent axial separation of the first and second sleeves.

A hose coupler is also disclosed comprising: a first sleeve with a first mating end and a first connector end for a tank or hose; a second sleeve with a second mating end and a second connector end for a tank or hose; a cam lock arm on one of the first and second mating ends and a cam receiver on the other of the first and second mating ends; a hook associated with the first sleeve; and a stop associated with the second sleeve; in which the hook and stop are movable relative to one another between a first position in which the first and second sleeve are separable in an axial direction and a second position in which the hook and stop interlock to prevent axial separation of the first and second sleeves.

A hose coupler is also disclosed comprising: a first sleeve with a first mating end and a first connector end for a tank or hose; a second sleeve with a second mating end and a second connector end for a tank or hose; a cam lock arm on one of the first and second mating ends and a cam receiver on the other of the first and second mating ends; and a part locking the first and second mating ends together upon relative rotation of the part at least partially around one or both of the first and second mating ends.

A hose coupler comprising: a first sleeve with a first mating end and a first connector end for a tank or hose; a second sleeve with a second mating end and a second connector end for a tank or hose; a cam lock arm on the first mating end and a cam receiver on the second mating end; and a hook and stop combination, in which in a locked position the hook receives a stop and is mounted on one of the first sleeve and the second sleeve, with the stop being mounted on the other of the first sleeve or second sleeve.

In various embodiments, there may be included any one or more of the following features: One of the first and second parts is rotatable around the other of the first and second parts. The first and second parts comprise a hook and stop, respectively, in which in the second position the hook receives the stop. The first part comprises a pin. The second part comprises a slot, which receives the pin in the second position. In the first position the cam receiver aligns with a locking path of the cam lock arm and a lateral slot of one of the first and second parts aligns with the other. In the first position the cam receiver does not align with a locking path of the cam lock arm and in the second position the cam receiver aligns with the locking path of the cam lock arm. The cam receiver comprises an indent in a surface of the first or second sleeve, the indent having a dimension, defined along a sleeve circumference, that is less than a full circumference. One or both of the first part is rotatable relative to the first sleeve, and the second part is rotatable relative to the second sleeve. The first part is fixed to the first sleeve. The second part is fixed to the second sleeve. The first part is fixed to the first sleeve and the second part is fixed to the second sleeve. The first and second parts further comprise a plurality of combinations of interlocking elements. In the second position the cam lock arms are free from interference by the first and second parts. In the second position the first and second part are threaded together. One or both the first and second parts comprises a handle. The first connector is coupled to a first tank or first hose, and the second connector is coupled to a second tank or second hose. The first mating end is a female end and the second mating end is a male end. A plurality of cam lock arms and cam receivers. A method of coupling two hoses or a tank and a hose using any one of the hose couplers above described.

These and other aspects of the device and method are set out in the claims, which are incorporated here by reference.

### BRIEF DESCRIPTION OF THE FIGURES

Embodiments will now be described with reference to the figures, in which like reference characters denote like elements, by way of example, and in which:
Fig. 1 is a perspective view of a sleeve and pin embodiment of the hose coupler in a disengaged configuration.
Fig. 2 is a perspective view of the sleeve and pin embodiment of the hose coupler of Fig. 1 in an engaged but unlocked configuration.
Fig. 3 is a perspective view of the sleeve and pin embodiment of the hose coupler of Fig. 1 in an engaged and locked configuration.
Fig. 4 is a sectional view of a sleeve and pin embodiment of the house coupler of Fig. 3 in an engaged and locked configuration.
Fig. 4A is an interior cross-section of the sleeve in the sleeve and pin embodiment of Fig. 1.
Fig. 5 is a perspective view of a hook and stop embodiment of the hose coupler in a disengaged configuration.
Fig. 5A is a side elevation view of the embodiment of Fig. 5 with the hose coupler in an engaged but unlocked configuration.
Fig. 6 is a perspective view of the hook and stop embodiment of the hose coupler of Fig. 5 in an engaged and locked configuration.
Fig. 7 is a perspective view of the hook and stop embodiment of the hose coupler of Fig. 5 in an engaged and locked configuration.
Fig. 8 is a sectional view of the engaged and locked configuration of the hook and stop embodiment of the hose coupler of Fig. 7.

### DETAILED DESCRIPTION

Immaterial modifications may be made to the embodiments described here without departing from what is covered by the claims.

List of reference elements shown in the drawings:
10-hose coupler
12-first sleeve
13-octagonal outer sleeve surface
14-second sleeve
16-first mating end
18-first connector end
19-threads
20-second mating end
21-grooves and shoulders
22-second connector end
24-hose
26-hose
28-cam lock arm
29-camming element window
30-cam receiver/ groove
32-cam receiver indent
33-aperture in arm 28 for a ring (not shown)
34-ear/bracket
36-aperture in ear 34
38-swing arm/lever arm
40-aperture in cam arm 28
42-pivot pin
44-camming end of arm 28
46-first radius
48-second radius
50-part (the part locking the first and second mating ends)
51-second part
52-sleeve
54-pin (stop)
55-top surface of pin
56-slot
57-base of pin
58-slot entry
59-flange
60-first slot path
61-dimension of indent
62-trough
63-sleeve circumference
64-second slot path
66-peak
68-seat
70-gasket / o-ring
72-handles
74-hook
76-lateral slot
78-trough
80-top stop surface of pint 54
82-shoulder stop of sleeve 12
83-base stop surface of pin 54
84-sloped lateral stop surface of pin 54
86-guide surface of slot 76

Cam and groove couplers are a kind of quick connect coupler usually used in most industries as a hose connection to avoid leakages. This kind of coupler is popular because it is considered to be a simple and economical way of re-connecting and disconnecting. A cam and groove fitting may be used in a system where rapid filling of chemical drums takes place. It can be used by factories that have needs of dye, paint and ink medium transfers. It is used where frequent changes of hoses are required to find the right mix. It also suitable for petroleum trucks, and other oil and gas applications.

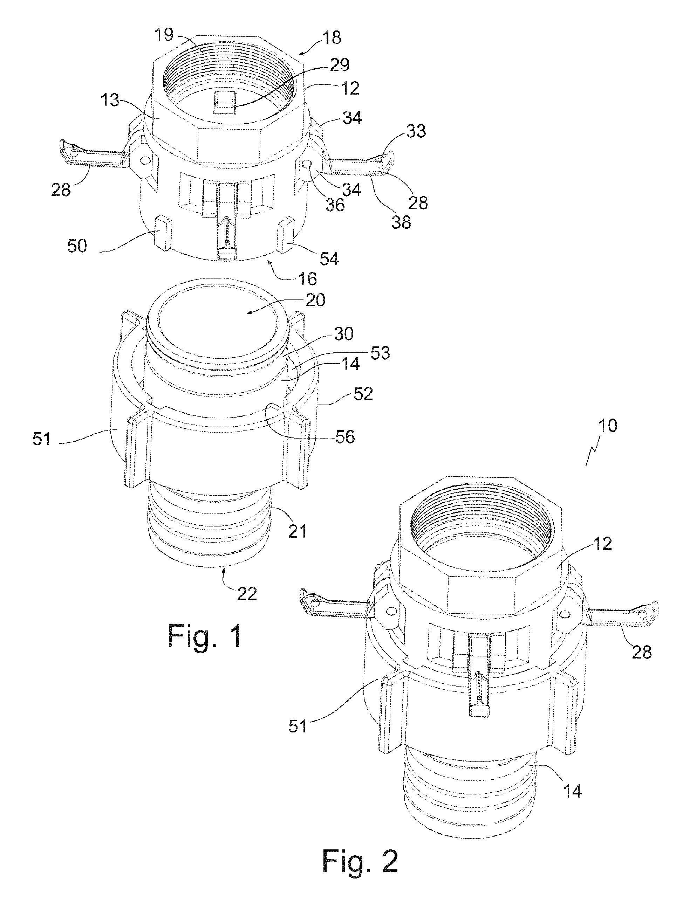

Referring to Figs. 1 there is shown a first embodiment of a hose coupler 10. In this embodiment there is a first sleeve 12 and a second sleeve 14. The first sleeve 12 has a first mating end 16 and a first connector end 18. The second sleeve 14 has a second mating end 20 and a second connector end 22. The first connector end 18 may include a thread 19 for connecting to a tank or hose (not shown) and the second connector end 22 may include a nipple with grooves or ridges 21 for frictionally retaining a tank or hose (not shown) in cooperation with a clamping device such as hose clamp (not shown). Each connector end 18 and 22 may take various suitable forms, including male and female forms, threaded and unthreaded forms. In the embodiment shown the first sleeve 12 has an octagonal outer sleeve surface 13. The sleeve surface 13 may be used for torqueing the first sleeve 12 onto a hose or tank, for example using a wrench (not shown).

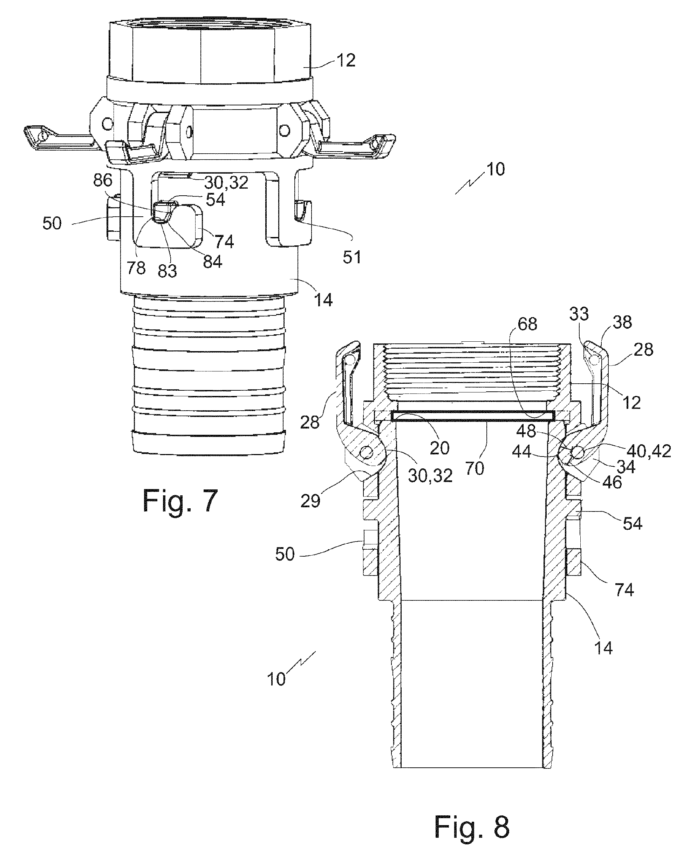

Referring to Fig. 1 the first mating end 16 has at least one cam lock arm 28. Referring to Figs. 1 and 8 the cam lock arm 28 may include a lever portion 38 and a cam arm aperture 40, with the cam arm aperture 40 aligned with cam bracket apertures 36 in cam brackets or ears 34 to receive a pivot pin 42 about which the cam lock arm 28 can hingedly rotate. The lever arm 28 may include an aperture 33 for a ring (not shown) or other suitable device to assist a user in operating arms 28. Fig. 8 is referred to for the purpose of describing the cam lock system of Fig. 1 because the embodiments of Figs. 1 and 8 have similar cam lock systems. Referring to Fig. 1, the second sleeve 14 has a cam receiver 30 that in the embodiment shown is a groove around the circumference of the cylinder or mating end 20 for receiving the cam lock arm 28. Referring to Fig. 8 first sleeve 12 may have camming element windows 29 through which a camming end 44 of arm 28 extends from an external to internal surface of sleeve 12 to grip cam receivers 30 of second sleeve 14.

Referring to Fig. 1 first part 50 is associated with the first sleeve 12, and a second part 51 is associated with the second sleeve 14. The part 50 may include at least a pin 54 on the first sleeve 12 and the second part 51 may include a sleeve 52 on the second sleeve 14. The sleeve 52 may have external handles or fins 72 (Fig. 7) for manual rotation of the sleeve 52. The sleeve 52 may have a slot 56 in an inner surface 53 for each pin 54 on the first sleeve 12, such that each pin 54 may be received into a slot 56 of the sleeve 52 during use. Referring to the sequence from Figs. 1-3, the pin 54 serves as a stop and the sleeve 52 as a hook in a hook and stop arrangement. Thus, insertion of pins 54 into the slots 56 (Figs. 1-2) and subsequent rotation of the first and second parts 50 and 51 (Figs. 2-3) causes the first part 50 and second part 51 to interlock to prevent axial separation of the first sleeve 12 and second sleeve 14.

In Fig. 2 the first sleeve 12 and second sleeve 14 are engaged but not locked. In this arrangement the cam lock arms 28 remain in an open position while the pins 54 (not shown) are received by, but not locked within, the slots 56 (not shown) of the part 50.

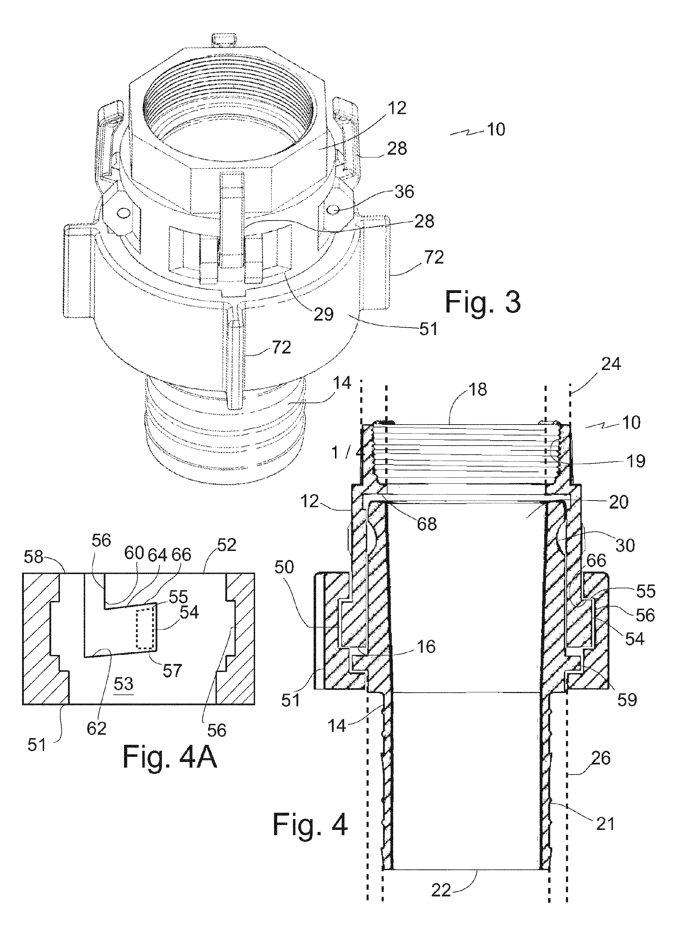

In Fig. 3 the first sleeve 12 and second sleeve 14 are engaged and locked. In this arrangement the pins 54 (not shown) are rotated and locked within the sleeve 52 and the cam lock arms 28 are in a closed position.

Referring to Fig. 4 the hose coupler 10 is in an engaged and locked arrangement. The second mating end 20 of the second sleeve 14 is engaged with the first mating end 16 of the first sleeve 12. The pins 54, have been inserted into slots 56 and rotated into a locked position. Further shown in Fig. 4 are a first hose 24 connected to the first connector end 18 of the first sleeve 12 and a second hose 26 connected to the second connector end 22 of the second sleeve 14. Fig. 4A is an interior cross-section of the sleeve 52 of the embodiment of Fig. 4, with the pin 54 in a locked position within the sleeve 52.

Referring to Figs. 1-4, 4A, the operation of the first embodiment is described. In operation, starting from a disengaged arrangement (Fig. 1), the first mating end 16 and second mating end 20 are axially moved together and pin 54 inserted into first slot path 60 or slot 56 in sleeve 52. Fig. 2 represents a first position, where the cam receiver 30 aligns with a locking path (shown in the sequence from Figs. 2-3) of the cam lock arm 28 and a lateral slot 64 of second part 51 aligns with the pin 54 (Fig. 4A). The locking path may be defined by the action of camming elements 44 of arm 28 (Fig. 8). At the first position, the cam arms 28 are aligned with receivers 30 and thus may be closed or opened, and the first and second parts 50 and 51 may be moved into an interlocked position. The spacing between the parts 50, 51 and cam receiver 30 may be adjusted to ensure that in the same position slot 64 and pin 54 align and cam receiver 30 aligns with cam arm 28. In the first position the base 57 of the pin 54 may be positioned in a trough 62 of slot 56, which may be a J-slot as shown. In the first position the first and second sleeves 12 and 14 are separable in an axial direction.

Rotating one of the first sleeve 12 and second sleeve 14 about a common central axis defined by the sleeves 12 and 14 moves the pin 54 through second slot path 64 into the locked position (Fig. 3). In the locked or second position, the top surface 55 of the pin 54 may be in contact with a peak 66 within the second or lateral slot path 64 within slot 56. Top surface 55 may be sloped as shown to follow the slope of second slot path 64 and to facilitate axial movement of pin 54 upon rotation of sleeve 52. Moving the cam lock arms 28 into the closed position then completes the lock between the first sleeve 12 and second sleeve 14. However, in the second position the first and second parts 50, 51 are already interlocked to prevent inadvertent axial separation of the sleeves 12, 14. Thus, even if arms 28 are disengaged with receivers 30, axial separation of sleeves 12 and 14 is prevented. In the event that cam arms 28 do disengage, the resulting force of fluid in the line may impart an axial separation force upon sleeves 12 and 14. In such an event peak 66 prevents inadvertent rotation of sleeve 52 that might otherwise cause parts 50 and 51 to uncouple.

To disengage the hose coupler 10 from an engaged arrangement the cam lock arms 28 may be first moved into the first or open position (Figs. 3-2). Rotating one of the first sleeve 12 and second sleeve 14 about their common axis from Fig. 2 would then move the pin 54 through second slot path 64 until the pin 54 is in a position at the entry or trough 62 of first sloth path 60. The first sleeve 12 and second sleeve 14 may then be moved axially apart with pin 54 drawn through first slot path 60.

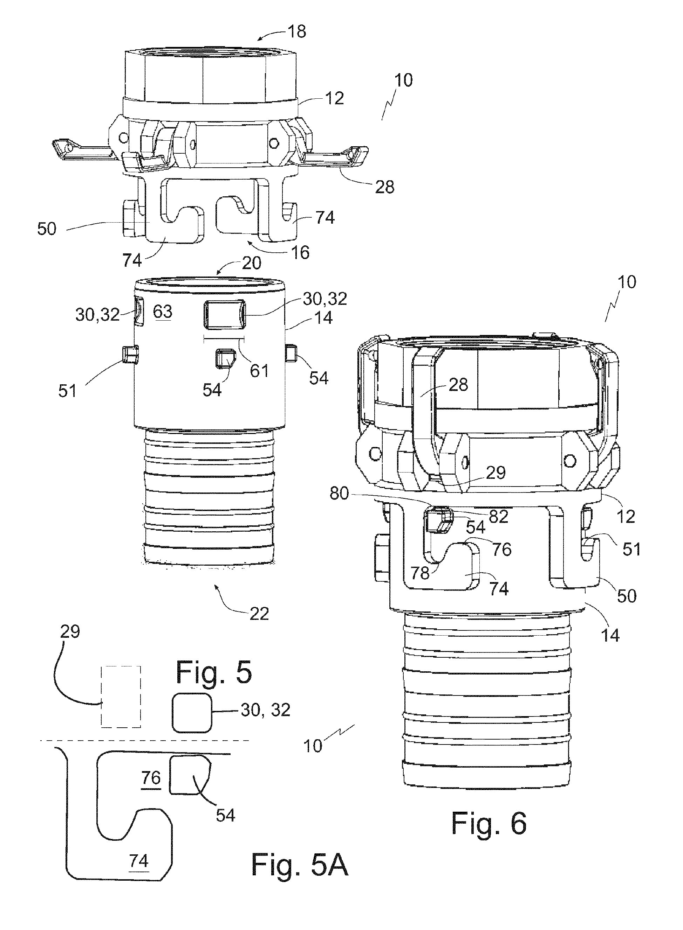

Figs. 5, 5A, 6, 7, and 8 show a second embodiment of the hose coupler 10. In this embodiment the part 50 may include at least a hook 74 on the first sleeve 12 and at least a stop or pin 54 on the second sleeve 14 (Fig. 5). In this particular embodiment the cam receiver 30 is an indent 30 in the second sleeve 14. The indent 30 has a dimension 61, defined along a sleeve circumference 63, the dimension 61 being less than a full circumference. Plural indents 30 are spaced about the sleeve circumference 63 in the example shown.

Referring to Fig. 5A the hose coupler 10 is in an engaged and unlocked arrangement, referred to as the first position. To get to the second position (Fig. 6) the coupler must pass through the first position shown in Fig. 5A. In the first position the cam receiver 30 does not align with a locking path (denoted by the dashed lines indicating camming window 29) of the cam lock arm 28.

Referring to Fig. 6, the hose coupler 10 is in an engaged and locked arrangement, referred to as the second position. In such an arrangement the first mating end 16 is mated with the second mating end 20 such that the top stop surface 80 of pin 54 is in contact with the shoulder stop 82 of hook 74. In the second position the cam receiver 30, in this case indents 32, align with the locking path of the cam lock arm 28. Fig. 8 details the final locked position in the locking path as described below. In the second position the cam lock arms 28 can be moved into a closed position, locking together first sleeve 12 and second sleeve 14. By configuring the receivers 30 and first and second parts 50 and 51 in such a fashion, the use of the locking mechanism of parts 50 and 51 is a prerequisite that then permits locking of the cam arms 28. Thus, proper use of the lock is ensured.

Referring to Fig. 7 the hose coupler 10 is shown in an unlocked but engaged arrangement. Such a position may be encountered for example if the cam arms 28 were inadvertently opened and fluid pressure pushed the first and second sleeves 12 and 14 apart. In such a case the failsafe or redundant safety operation of parts 50 and 51 is engaged. The cam lock arms 28 are in an open position, unlocking the first sleeve 12 and second sleeve 14. The first sleeve 12 and second sleeve 14 are prevented from further axial separation by hooks 74 catching pins 54 in troughs 78. On the other hand, the position of Fig. 7 might be encountered during proper removal of first and second sleeves 12 and 14. In such a case the sloped lateral stop surface 84 of pin 54 cooperates with the sloped guide surface 86 of slot 76 upon rotation of parts 50, 51 to facilitate removal of pin 54 from hook 74.

In Fig. 8 the second embodiment is shown in a locked and engaged position including a detailed view of the cam lock arms 28 in a closed position. Fig. 8 is useful among other things to demonstrate the locked position of cam arms 28 along a locking path. The cam lock arms 28 have a camming end 44 pivoting about the camming pivot pin 42. The camming end 44 has a first radius 46 and second radius 48 measured from the camming pivot 42, with the second radius 48 being larger than the first radius 46. Thus, when the cam lock arm 28 is in the open position (not shown in the figure), it is the first radius 46 portion of the camming end 44 which is closer to the cam receiver 30 and this shorter end does not engage with the receiver 30, consequently allowing relative axial movement of the first sleeve 12 and second sleeve 14. When the cam lock arm 28 is in the closed position (as shown in the figure) the second radius 48 portion of the camming end 44 engages with the cam receiver 30, preventing relative axial movement of the first sleeve 12 and second sleeve 14. The second radius 48 also cooperates with the receiver 30 to contact the receiver 30 and push the mating end 20 towards the sealing seat 68 of first sleeve 12. In the example shown a gasket 70 is compressed between the seat 68 and mating end 20 upon closure of the cam lock, thus achieving an effective seal between sleeves 12 and 14. A suitable gasket may be used, including an o-ring or packing.

The embodiments described above show the cam lock arms 28 positioned on the first sleeve 12 and the cam receivers 30 on the second sleeve 14. However, such an orientation may be reversed, for example in the case of connection via over-the-center cam latches, where the male end may mount the cam arms 28.

Relative rotation is possible between the first and second parts 50, 51, meaning that only one part need move relative to the other, or both may move relative to one another. An example of the former is shown in Figs. 1 and 5A, with the sleeve 52 rotating in Fig. 1 and the hooks 74 rotating in Fig. 5A. An example of the latter might occur for example if both parts 50 and 51 were independent sleeves mounted for rotation on sleeves 12 and 14, respectively. In such an embodiment the parts 50 and 51 may interlock in a variety of suitable fashions, for example by threading together, hooks and stops, or other mechanisms.

Each part 50 and 51 is associated with a respective one of first and second sleeves 12 and 14. Association may mean mounted in some cases, for example mounted for rotation on the respective sleeve. Association may also include integral connection, for example the hooks 74 of Fig. 7 being fixed to, for example integrally depending from, sleeve 12. Association may also mean that the respective part abut or seat upon but do not connect to the respective sleeve, for example in the case of sleeve 52 of Fig. 1. Referring to Fig. 4 the sleeve 52 is retained in the second position between pin 54 and a flange 59 of second sleeve 14. Similarly, if pins 54 were replaced with a sleeve such as sleeve 52, the sleeve of first part 50 may be retained by a flange (not shown) on first sleeve 12. In such an embodiment both parts 50 and 51 are rotatable relative to each's respective sleeve 12 and 14.

Either part 50 or 51 or both may threadably attach to the respective sleeve 12, 14. Latches may be incorporated into the parts 50, 51. Either one or both of the first and second parts may be rotated around the other of the first and second parts. Either (Fig. 1) or both (Fig. 5) the first and second parts 50 and 51 may be fixed to the respective sleeves 12, 14. The first and second parts 50 and 51 may comprise a plurality of combinations of interlocking elements, for example the plural pin 54 and slot 56 combinations of Fig. 1 or the plural hook 74 and pin 54 combinations of Fig. 5.

In the second position the cam lock arms 28 are free from interference by the first and second parts. Thus, the cam lock arms 28 may still be moved between the open and closed positions while locked by parts 50 and 51. Parts 50 and 51 thus act as a non-interfering safeguard without adding radial footprint to the coupler 10. Either of ends 16 and 20 may be a male end, with the other end being a female end. A plurality of cam lock arms 28 and receiver 30 combinations may be present, for example four such combinations as shown in each embodiment.

The function of a stop as described here is to provide a surface that opposes axial motion of a part contacting the stop. A stop may include a surface perpendicular to, or slanted with respect to, the axis of the coupler. A stop may include a shoulder or partial flange. In some cases hooks may be hingedly connected to first or second sleeves 12 and 14 to swing into connection with pins or stops 54. In some cases hooks may be present on both parts 50 and 51, for example hooks that engage one another (not shown). Sleeves 12 and 14 may be rigid parts distinct from a hose or tank. If either part 50 or 51 is provided as a sleeve, it may be advantageous to have the sleeve be mounted external to the respective sleeve 12 or 14 to avoid the part from forming part of the fluid bore and thus becoming a potential site for leaks across the dynamic seal. Hoses include pipes.

In the claims, the word "comprising" is used in its inclusive sense and does not exclude other elements being present. The indefinite articles "a" and "an" before a claim feature do not exclude more than one of the feature being present. Each one of the individual features described here may be used in one or more embodiments and is not, by virtue only of being described here, to be construed as essential to all embodiments as defined by the claims.

## Claims

1. A hose coupler comprising:
a first sleeve with a first mating end and a first connector end for a tank or hose;
a second sleeve with a second mating end and a second connector end for a tank or hose;
a cam lock arm on one of the first and second mating ends and a cam receiver on the other of the first and second mating ends;
a first part associated with the first sleeve; and
a second part associated with the second sleeve;
in which the first and second parts are rotatable relative to one another between a first position in which the first and second sleeve are separable in an axial direction and a second position in which the first and second parts interlock to prevent axial separation of the first and second sleeves.

2. The hose coupler of claim 1 in which one of the first and second parts is rotatable around the other of the first and second parts and/or in which the first and second parts comprise a hook and stop, respectively, in which in the second position the hook receives the stop.

3. The hose coupler of any one of claim 1 - 2 in which the first part comprises a pin.

4. The hose coupler of claim 3 in which the second part comprises a slot, which receives the pin in the second position.

5. The hose coupler of any one of claim 1 - 4 in which in the first position the cam receiver aligns with a locking path of the cam lock arm and a lateral slot of one of the first and second parts aligns with the other.

6. The hose coupler of any one of claim 1 - 4 in which:
in the first position the cam receiver does not align with a locking path of the cam lock arm; and
in the second position the cam receiver aligns with the locking path of the cam lock arm.

7. The hose coupler of claim 6 in which the cam receiver comprises an indent in a surface of the first or second sleeve, the indent having a dimension, defined along a sleeve circumference, that is less than a full circumference.

8. The hose coupler of any one of claim 1 - 7 in which one or both of:
the first part is rotatable relative to the first sleeve; and
the second part is rotatable relative to the second sleeve.

9. The hose coupler of any one of claim 1 - 9 in which the first part is fixed to the first sleeve, or in which the second part is fixed to the second sleeve.

10. The hose coupler of any one of claim 1 - 7 in which the first part is fixed to the first sleeve and the second part is fixed to the second sleeve.

11. The hose coupler of any one of claim 1 - 10 in which the first and second parts further comprise a plurality of combinations of interlocking elements and/or in which in the second position the cam lock arms are free from interference by the first and second parts.

12. The hose coupler of any one of claim 1 - 11 in which in the second position the first and second part are threaded together and/or in which one or both the first and second parts comprises a handle.

13. The hose coupler of any one of claim 1 - 12 in which the first connector is coupled to a first tank or first hose, and the second connector is coupled to a second tank or second hose and/or in which the first mating end is a female end and the second mating end is a male end.

14. The hose coupler of any one of claim 1 - 13 further comprising a plurality of cam lock arms and cam receivers.

15. A hose coupler comprising:
a first sleeve with a first mating end and a first connector end for a tank or hose;
a second sleeve with a second mating end and a second connector end for a tank or hose;
a cam lock arm on one of the first and second mating ends and a cam receiver on the other of the first and second mating ends;
a hook associated with the first sleeve; and
a stop associated with the second sleeve;
in which the hook and stop are movable relative to one another between a first position in which the first and second sleeve are separable in an axial direction and a second position in which the hook and stop interlock to prevent axial separation of the first and second sleeves.
